# EUROPEAN PATENT APPLICATION

(11) **EP 1 672 629 A1**
(43) Date of publication of application: **21.06.2006**
(21) Application number: 04726418.9
(22) Date of filing: 08.04.2004
(51) Int. Cl.: G11B 17/00

(54) **A DECK COMPATIBLE FOR BOTH LARGE AND SMALL DISC**

(30) Priority: 28.09.2003 CN 03146986
(71) Applicant: Yang, Dongzuo, Dongguan, Guangdong 523860 (CN)
(72) Inventor: Yang, Dongzuo, Dongguan, Guangdong 523860 (CN)
(74) Representative: Sierzputowska, Iwona
(86) International application number: PCT/CN2004/000324
(87) International publication number: WO 2005/031733

(57) **Abstract**

A deck which is compatible for both large disc and small disc includes a case, a transport plate, a disc driving means and a signal means, etc. An opening for a disc to be inserted to is disposed on the case and the transport plate is disposed inside of the case in the opening. The transport plate further includes a disc compatible means, the compatible means is connected to the transport plate movably, the forside of the disc compatible means is a free end which is turnable in a certain range of angle and a disc allot means is provided on the forside of the disc compatible means. The invention has such advantages as that a disc cartridge is not requiring, its configuration is simple, the deck is thin, the noise is little, the cost is less, both the large and small discs can be used compatible, the quality of the reading and writing disc is fine and the laser head and object lens, etc., are vibrationproof and can keep a accurate position relative to the disc.

## Description

### FIELD OF THE INVENTION

The present invention relates to disc loading systems using Compact Disc, Digital Video Disc and the like as information recording media for recording information, particularly, to a slot-in loading system that is used for the CD loading and unloading in a CD system with build-in compatibility, driving, and clamping apparatus.

### BACKGROUND OF THE INVENTION

Because CD has the characters of high density, and completely digital recording, it has become the main digital data recording medium, and has been widely applied in optical disc players, such as CD, CD-ROM, VCD, DVD, LD and MD. It has more and more involved in people's daily life. In the existing compact disc players with compatibility and driving apparatus, there are mainly two types: the first type of compatible apparatus is equipped with upper and lower levels which share the same circular center, and is capable of placing 80 mm and 120 mm CDs into proper positions through the disc tray of the disc player; a driven rack is employed underneath the disc tray, when the open switch is turned on and off, a motor drives a driving gear to rotate, the driving gear then drives the disc tray in and out of the disc player by driving the driven rack operation, the loading and unloading of the 80 mm and 120 mm CDs into the proper positions can then be implemented; the structure of this type of compatibility apparatus and driving apparatus for the disc player systems is more simple, but because more than one disc tray is required, and after loading the disc into the disc player, a gap needs to be preserved between the CD and the disc tray to ensure the CD driven by the motor is turning smoothly, the thickness of the disc driving apparatus is, however, substantial, which is not satisfactory to consumers' demand of super thin and appealing appearances; particularly, because the CD tray can only go straight in and out of the disc player, in order to raise the CD to keep a certain gap between the CD and the disc tray, it is necessary to design the connections between those optical pickup mechanism members like a spindle motor that drives the CD to rotate, a laser head, a collimating lens etc. of the optical pickup mechanism and those fixed members to be flexible; hence, it is difficult to make sure those members like laser head, collimating lens etc., are placed into an accurate proper position of the inserted CD and, therefore, very difficult to avoid vibration, which directly affects the correctness of data reading, especially after long term usage, this problem becomes even more obvious when some members are worn out, and very noisy; another type of slot-in loading system with compatibility and driving apparatus is a loading system with slot-in and slot-out disc capability, mainly used in vehicle disc player systems, equipped with signal switches, when users insert a CD into the snapping clip of the slot, the CD touches the two ends of the snapping clip, and causes the snapping clip to open to the size of the disc to achieve the compatibility of different disc sizes; after being inserted in for some distance through the snapping clip, the CD triggers the signal switch inside the loading system, and activates the motor, the driving gear starts to rotate by way of the transmission of the driven rack, the friction created by the contact between the driving gear and the CD brings the CD into the disc player, and places the CD in the position corresponding to the position of the spindle motor, the driving gear is then moving downward under the operation of the motor, and a gap is created between the CD and the driving gear, after been clamped by the clamping means, the CD driven by the spindle motor starts to spin, and the related members start reading data, etc., this type loading system with compatibility and driving apparatus, its snapping clip can hold disc of 80 mm and 120 mm diameters, achieve the compatibility purpose, besides, the CD optical pickup mechanism can be fixed, a normal data reading can be guaranteed, and the thickness is much smaller; however, the structure is complicated, particularly the transmission mechanism has many members, requiring higher manufacturing accuracy, higher cost.

### SUMMARY

One of the objects of the present invention is to provide a slot-in loading system that has simple structure, very thin, by the disc allocation configuration at the fore end of the compatibility apparatus to effectively achieve the loading of large, small discs into proper positions and both the large and small discs are compatible in the slot-in loading system.

The second object of the present invention is to provide a signal switch that prevents wrong operation initiated by the driving apparatus after placing big and small discs.

The third object of the present invention is to provide a simple structure, lower the manufacturing cost, not easily distorted and destroyed disc, and well clamped disc clamping and compatible apparatus.

The fourth object of the present invention is to ensure certain space preserved between the disc and the transfer base so that the disc can spin smoothly, and disc pickup for reading and writing can be fixedly installed, further ensure the reading and writing quality and apparatus like the laser head and collimating lens etc. can avoid vibration effectively, the disc will definitely be placed into the proper position accurately.

One of the preferred embodiments of the present invention is a loading system compatible with big and small discs, including a housing unit, transmission mechanism, signal switches etc.; the housing unit contains a slot for inserting disc, inside the housing unit, a transmission mechanism is set up for transporting disc into the proper position for reading and writing, no compatible apparatus set up inside the housing unit; the fore end of the disc compatible apparatus is a flexible end, and is capable of turning within certain angles; along the disc entering direction of the disc compatible apparatus, there is a disc holder conforming to disc diameters; at the fore end of the disc compatible apparatus, a disc allocation configuration is provided.

As one of the improvements made by the present invention, the transporting mechanism includes a transfer base and a driving apparatus, the transfer base is installed inside the slot within the housing unit, a hole that reveals the reading and writing optical pickup mechanism is formed on the inner transfer unit of the transfer base; disc compatible apparatus is connected to the inner transfer unit flexibly. When inserting a small disc, the small disc enters into the small disc holder of the compatible apparatus; when inserting a large disc, because the diameter of the big disc exceeds the small disc holder of the disc compatible apparatus, the edge of the disc first touches the disc allocation configuration allocated at the fore end of the disc compatible apparatus, the fore end of the disc compatible apparatus is then lifted up to open by the disc, letting the disc to enter the big disc holder of the inner transfer unit.

As one of the improvements of the present invention, a signal switch includes a first signal control that activates the driving apparatus when a small disc is inserted and a second signal control that activates the driving apparatus when a big disc is inserted; the first signal control locates at the disc compatible apparatus, and the second signal control locates at the inner transfer unit; the first signal control and the second signal control are connected in parallel, wherein the parallel circuit is connected to the control circuit outside the loading system. When inserting a small disc, the small disc enters into the small disc holder of the disc compatible apparatus, and touches the first signal control at the disc compatible apparatus, activates the driving apparatus; when inserting a big disc, the big disc enters into the big disc holder of the inner transfer unit, and touches the second signal control at the inner transfer unit, activates the driving apparatus.

One of the improvements of the present invention is that a third signal control connects to the second signal control in series, the third signal control locates at the inner transfer unit, these two signal controls are configured in a fashion that they can be touched simultaneously when a large disc is spinning inside the loading system, but not when a small disc is spinning inside the loading system. Only when inserting the big disc, the second and the third signal controls can be touched simultaneously, hence, further ensure the driving apparatus can only be activated by placing a big disc into the big disc holder, preventing wrong operation.

As one of the improvements of the present invention, there is a big disc holder with diameter conforming to the big disc at the inner transfer unit; the inner transfer unit has clipping plates, the disc compatible apparatus is also at the inner transfer unit, the clipping plates and the back end of the disc compatible apparatus are connected to the inner transfer unit, the clipping plates and the fore end of the disc compatible apparatus are free ends that can turn within certain angles; there is a packing mechanism among the clipping plates, the disc compatible apparatus, and the inner transfer unit, the clipping plates, the disc compatible apparatus, and the inner transfer unit are all closely packed together, a separation apparatus is convexly formed at the inner surface of the housing unit for separating the clipping plates, the disc compatible apparatus and the inner transfer unit at the proper reading and writing position; the disc allocation configuration is the guiding bevel or the guiding curved surface at the fore end of the disc compatible apparatus.

When inserting a small disc, the small disc enters the small disc holder of the disc compatible apparatus, and tightly clamped to the inner transfer unit by the clipping plates, it touches the first signal control at the disc compatible apparatus when inserted into the final position, enabling the driving apparatus to drive the disc into the proper position for reading and writing, at the same time the convexly formed separation apparatus separates the clipping plates, the disc compatible apparatus, and the inner transfer unit; conversely, the disc is unloaded through the reverse process. When inserting a big disc, because the diameter of the big disc exceeds the disc holder of the disc compatible apparatus, the disc edge first touches the guiding bevel or the guiding curved surface at the fore end of the disc compatible apparatus, the fore end of the compatible apparatus is then lifted up to open by the disc, the big disc enters the inner transfer unit and tightly clamped by the clipping plates, it touches the two corresponding parallel signal controls inside the inner transfer unit when inserted into the final position, and enabling the driving apparatus to move the disc into the proper position for reading and writing, at the same time the convexly formed separation apparatus separates the clipping plates, the disc compatible apparatus, and the inner transfer unit; conversely, the disc is unloaded through the reverse process. If it is the edge of a small disc that touches the guiding bevel or the guiding curved surface at the disc compatible apparatus fore end, the fore end of the compatible apparatus is then lifted up to open by the disc, the small disc enters the big disc holder of the inner transfer unit, because it cannot simultaneously touch the second and the third signal controls which are connected in series, the circuit is not turned on, as a result, the small disc cannot get under the optical pickup unit.

As one of the improvements of the present invention, the packing mechanism used among the clipping plates, the disc compatible apparatus, and the inner transfer unit is: a first iron plate is provided on the disc holder of the inner transfer unit, a first magnet attracted to the first iron plate on the disc holder of the inner transfer unit for tightly clamping discs is provided at the clipping plates fore end where gets in contact with discs, there is a second iron plate provided on the disc compatible apparatus, and a second magnet attracted to the second iron plate is provided on the inner transfer unit. The packing mechanism has simple structure, good compacting effect, and guarantees the disc can move between the clipping plates and the inner transfer unit during insertion as well.

As one of the improvements of the present invention, the small disc holder is the curved blocking blades provided at the two sides of the disc compatible apparatus fore end with diameter slightly larger than or equal to the diameter of a small disc; the radian of the curved blocking blades at the two sides are smaller or equal to half a circle, grooves corresponding to the curved blocking blades are formed in proper positions of the clipping plates; the second iron plate on the disc compatible apparatus is attracted to the second magnet on the inner transfer unit through an aperture on the clipping plates and tightly packed next to the inner transfer unit by the magnetic force; the disc allocation configuration is the guiding bevel or guiding curved surface formed between the curved blocking blades and the upper or lower surface of the disc compatible apparatus. When inserting a small disc, the small disc enters into the curved blocking blades of the disc compatible apparatus, and through the clipping plates tightly clamped onto the inner transfer unit, the small disc touches the signal switch inside of the disc compatible apparatus when inserted into the final position, and activates the driving apparatus to move the disc into the reading and writing position; when inserting a big disc, because the diameter of the big disc exceeds the diameter of the curved blocking blades of the disc compatible apparatus, the edge of the big disc enters by first touches the guiding bevel or the guiding curved surface outside of the curved blocking blades, the curved blocking blades of the compatible apparatus are then lifted up to open by the disc, letting the disc to enter the inner transfer unit and tightly clamped by the clipping plates, the disc touches the two corresponding signal controls connected parallel inside of the inner transfer unit when inserted into the final position, and activates the driving apparatus to move the disc into the reading and writing position; conversely, the disc is unloaded through the reverse process. If the edge of the small disc first touches the guiding bevel or the guiding curved surface outside of the curved blocking blades, the curved blocking blades of the compatible apparatus are immediately lifted up to open by the disc, letting the disc to enter the disc holder of the inner transfer unit, because the disc cannot simultaneously touch the second and the third signal controls which are connected in series, the circuit is not turned on, and as a result, the small disc cannot get under the optical pickup unit.

As one of the improvements of the present invention, the disc compatible apparatus is on top of the clipping plates, and the clipping plates are on top of the inner transfer unit, the disc compatible apparatus is tightly packed close to the inner transfer unit through the clipping plates, the clipping plates are tightly packed next to the inner transfer unit; when the inner transfer unit travels to the reading and writing position, the apparatus that separates the inner transfer unit, the clipping plates, the disc compatible apparatus and the disc is a first convex block formed at the proper position of the inner surface of the housing unit, the disc allocation configuration is the guiding bevel or guiding curved surface formed between the fore end of the disc compatible apparatus and its lower surface.

As one of the improvements of the present invention, the disc compatible apparatus is on top of the clipping plates, and the clipping plates are on top of the inner transfer unit, the disc compatible apparatus is tightly connected to the inner transfer unit through the clipping plates, the clipping plates are tightly connected to the inner transfer unit, when the inner transfer unit moves to the reading and writing position, the apparatus that separates the inner transfer unit, the clipping plates, the disc compatible apparatus and the disc is the first convex block on the proper position of the inner surface of the housing unit, the disc allocation configuration is the guiding bevel or guiding curved surface formed between the fore end of the disc compatible surface and the lower surface.

As one of the improvements of the present invention, the inner transfer unit is on top of the clipping plates, which are on top of the disc compatible apparatus, the inner transfer unit is tightly packed next to the clipping plates, the disc compatible apparatus is tightly packed close to the inner transfer unit through the clipping plates, when the inner transfer unit travels to the reading and writing position, the apparatus that separates the inner transfer unit, the clipping plates, the disc compatible apparatus and the disc is the first convex block formed at the proper position of the inner surface of the housing unit, the disc allocation configuration is the guiding bevel or guiding curved surface formed between the fore end of the disc compatible apparatus and its upper surface.

As one of the improvements of the present invention, the clipping plates are on top of the inner transfer unit, which is on top of the disc compatible apparatus, the clipping plates are tightly packed next to the inner transfer unit, when the inner transfer unit travels to the reading and writing position, the apparatus that separates the inner transfer unit, the clipping plates, the disc compatible apparatus and the disc is the first convex block formed on the proper position of the inner surface of the housing unit, the disc allocation configuration is the guiding bevel or guiding curved surface formed between the fore end of the disc compatible apparatus and its upper surface.

As one of the improvements of the present invention, there are one or more than one guide bars coupled with the transfer base, and one or more than one guide bar tracks that are corresponding to the plurality of guide bars are provided at the housing unit, the guide bar tracks are possibly not having the same height level, and are configured along the disc traveling direction, the back ends of the guide bar tracks smoothly curve downward, each downward curving point of the guide bar track back end corresponding to the transfer base moves the disc to the position of the disc holder of the spindle motor or moves the disc to the guide bar's position where the disc is within the range of the disc holder. When the disc reaches the reading and writing position, the separation apparatus at the bottom of the loading system separates the clipping plates, the disc compatible apparatus, the inner transfer unit and the disc, creates some space between the disc and the optical pickup mechanism, and ensures the reading and writing quality; meanwhile, because the transfer base is traveling up and down, and the laser head and collimating lens etc. are not traveling, the laser head and collimating lens etc. can avoid vibration effectively and keep an accurate relative position with the disc.

As one of the improvements of the present invention, an adjustment signal control is provided at a proper position of the inner bottom of the loading system to adjust the height of the transfer base when it travels around the downward curving point of the guide bar track. When the disc at the reading and writing position, the transfer base touches the adjustment signal control, the height of this signal control is adjustable; the height of the transfer base at the downward curving point of the guide bar track can then be adjusted, ensuring an accurate position relationship between the disc and the optical pickup mechanism.

As one of the improvements of the present invention, a slot is flanked by a chassis of the housing unit, the driving apparatus is a driving gear driven by a motor that connects the transfer base and the chassis and a driven rack that matches the driving gear and is formed on an appropriate position of the inner transfer unit, a limiting device is provided on the transfer base to prevent the separation of the transfer base and the driving gear; when a guide bar moves toward the downward curving point of a wall trough, a rabbet that matches the shape of the driving gear is formed at the corresponding position where the driven rack gets in contact with the driving gear, the plurality of guide bar tracks are wall troughs on the chassis, the plurality of guide bars are on the transfer base intersecting the chassis, the guide bars extend into the corresponding wall troughs, in the back end of the wall troughs, the wall troughs curve downward smoothly. The motor drives the driving gear that is fixedly connected to a proper position of the housing unit by a belt, and then further drives the driven rack that matches the driving gear at the bottom of the transfer base, enabling the transfer base to move forward and backward, structure simple, low cost, and driving dependably; the wall trough style guide bar track has simple structure, and enables the transfer base traveling smoothly and dependably along the wall trough, making adjustment easy.

As one of the improvements of the present invention, the signal switch includes a flexible bronze or brass plate, and plastic cover etc., the flexible brass is fixedly connected to the plastic cover to form a circuit; there are apertures on the plastic cover, for the future assembly use; one end of the brass plates extend to the same direction and curve to form parallel planes, the other end of the two brass plates are shown as insertion plates, and are connected to the signal control circuit; the adjustment signal control includes a support frame and two flexible plates fixed onto the support frame etc., every flexible plate contains connectors for electrical circuit connection, adjustable screws are provided on one end of the support frame, which contains fixed flexible plates; the limiting device on the transfer base is a convex block extending from the transfer base to the driving gear, a soft material is installed at the disc holder of the inner transfer unit and the disc holding spot to prevent damaging discs. In use, utilizing the proper connector through the apertures to fix the adjustment signal control onto the needed place, such as the inner transfer unit and the disc compatible apparatus, one end of the insertion brass plates connects to the connector of the object in use, through another end to press or push along the curving direction of the brass plates, forcing two curving brass plates to contact each other, the circuit is connected and functioned as a switch. The structure of this adjustment signal control is simple, easy to install, and safe to connect.

One of the preferred embodiments is a slot-in loading system with many advantages, such as no disc tray required, simple structure, very thin and convenient to use, low noise and cost, big or small disc size compatible, high quality data reading and writing, the laser head and collimating lens etc. can avoid vibration effectively, and keeping an accurate relative position with the disc.

### DESCRIPTION OF THE DRAWINGS

The present invention can be further described in details by combining the following attached drawings with the preferred embodiments:
Figure 1 is the structural schematic diagram of the first preferred embodiment of the present invention;
Figure 2 is the structural schematic diagram of the first preferred embodiment without the top cover of the present invention;
Figure 3 is the sectional view diagram along the A-A line of the Figure 1 of the present invention;
Figure 4 is the structural schematic diagram of the second preferred embodiment of the present invention;
Figure 5 is the structural schematic diagram of the second preferred embodiment without the top cover of the present invention;
Figure 6 is the top view of the second preferred embodiment of the present invention;
Figure 7 is the sectional view diagram along the A-A line of the Figure 6 of the present invention;
Figure 8 is the structural schematic diagram of the adjustment signal control of the present invention;
Figure 9 is the structural schematic diagram of the disc compatible apparatus of the second preferred embodiment of the prevent invention;
Figure 10 is the structural schematic diagram of the signal switch and the circuitry diagram of the present invention;
Figure 11 is the structural schematic diagram of the third preferred embodiment of the present invention;
Figure 12 is the sectional view along the A-A line of the Figure 11 of the present invention;
Figure 13 is the structural schematic diagram of the fourth preferred embodiment of the present invention;
Figure 14 is the structural schematic diagram of the fourth preferred embodiment without the top cover of the present invention;
Figure 15 is the structural schematic diagram of the fifth preferred embodiment without the top cover of the present invention.

### DETAILED DESCRIPTION OF THE INVENTION

### Preferred Embodiment 1

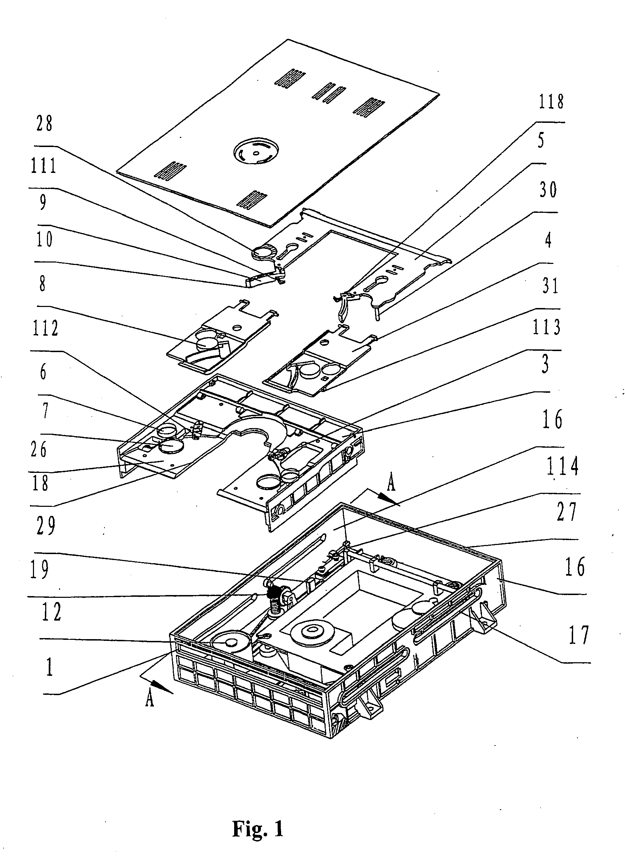

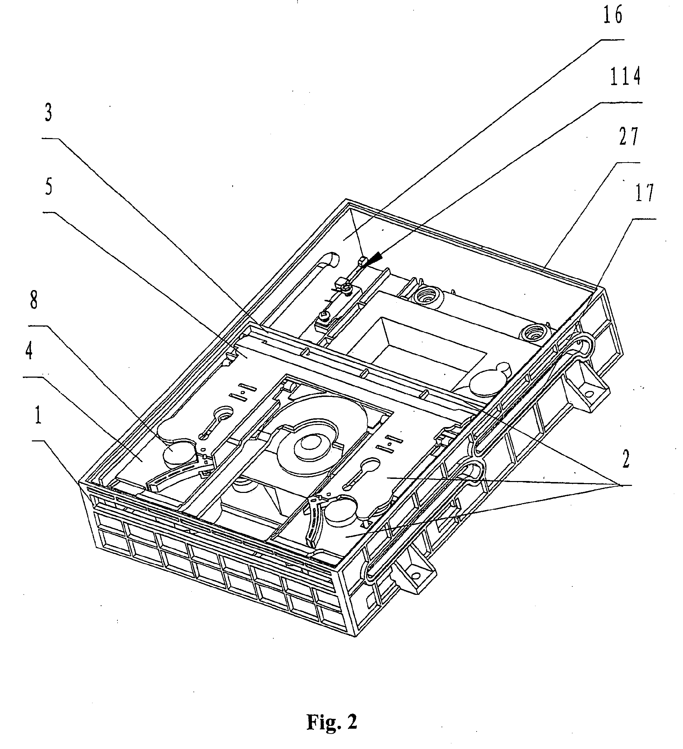

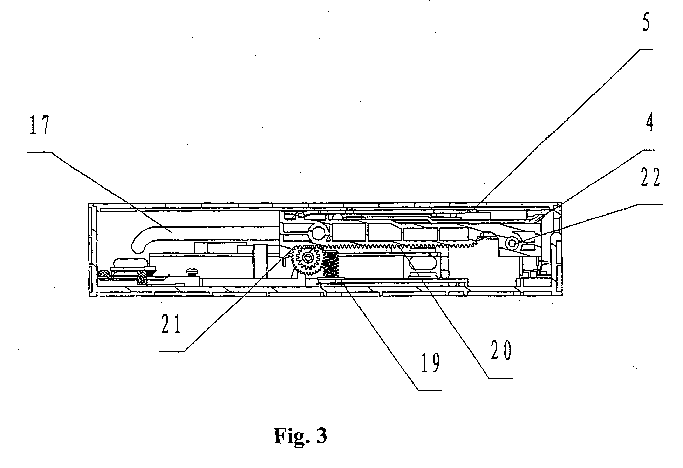

As shown in Figure 1, Figure 2, Figure 3, Figure 8, Figure 10, one preferred embodiment of the present invention is the slot-in loading system, the optical pickup mechanism is currently available in the market with up and down flexibility structure, the driving apparatus of the disc transfer base 2 is also currently available in the market, a slot 1 for slotting in disc is provided at the housing unit 27, the transfer base 2 is inside the slot 1 of the housing unit 27; the transfer base 2 includes an inner transfer unit 3 for holding discs, a rubber tier for preventing disc friction damage is installed at the fore end of the inner transfer unit 3 where gets in touch with discs, a hole 18 that reveals the reading and writing pickup unit is formed on the inner transfer unit 3 and a disc holder 26 corresponding to discs with 120 mm diameter, the holding spot of the disc holder 26 is patched with a cushion cloth to prevent damaging the disc, a driving rack 20 matches the driving gear 19 driven by a motor 12 is provided at the bottom of the transfer base 2, and the left, right clipping plates 4 and a disc compatible apparatus 5 that is compatible with and capable of controlling big and small discs from entering the inner transfer unit 3 are provided on the inner transfer unit 3; the left, right clipping plates 4 and the back end of the disc compatible apparatus 5 are connected to the inner transfer unit 3, the fore end of the disc compatible apparatus is a free end, which can turn within certain angles; the disc compatible apparatus 5 is on top of the clipping plates 4, clipping plates 4 is on top of the inner transfer unit 3, there is a first iron plate 7 at the disc holding point of the inner transfer unit 3, and a first magnet 8 is provided at the fore end of the clipping plates 4 where the clipping plates get in contact with discs, the first iron plate 7 and the first magnet 8 tightly clamp disc by attracting to each other, there is a second iron plate 28 at the disc compatible apparatus 5, the second iron plate 28 attracts to a corresponding second magnet 6 that locates at the inner transfer unit 3 through the corresponding aperture on the left, right clipping plates 4, the disc compatible apparatus 5 is closely packed to the inner transfer unit 3 with the left, right clipping plates 4 in between; a signal switch includes a first signal control 111 that controls the activation of the driving apparatus during small discs insertion and a second signal control 112 and a third signal control 113 together control the activation of the driving apparatus during big discs insertion, the first signal control is at the disc compatible apparatus 5; the second and third signal controls are at the inner transfer unit 3, and are connected in series; the first signal control 111 and the serial circuit formed by the second 112 and third 113 signal controls are connected in parallel, this parallel circuit is connected to a control circuit outside the loading system, the second and third signal controls are in a location that they can be touched simultaneously when a large disc is spinning inside the loading system, but not when a small disc is spinning inside the loading system; the signal switch is formed by two pieces of flexible bronze or brass 13, and is fixed into an electrical circuit by a plastic cover 14, a plurality of apertures are formed on the proper position on the plastic cover 14, for future assembly convenience, one end of the two pieces bronze or brass 13 extend to the same direction and curve to form parallel planes, the other end of these two pieces bronze or brass 13 extend out as insertion plates; curved blocking blades 9 with diameter equal or slightly larger than 80 mm are formed at two sides of the slot 1 of the fore end of the disc compatible apparatus 5, the curved blocking blades 9 are equal to or smaller than half a circle, there are apertures formed corresponding to the curved blocking blades 9 at the left, right clipping plates 4, the curved blocking blades 9 of the disc compatible apparatus 5 are closely packed to the inner transfer unit 3 through the left, right clipping plates 4 under magnetic force, there is a guiding bevel 10 formed between the fore end of the curved blocking blades 9 and the disc compatible apparatus lower surface. The slot 1 is flanked by a chassis 16 of the housing unit 27, wall troughs 17 are formed at two sides of the chassis 16, the wall troughs 17 extend along the disc traveling direction, and two or more than two wall troughs 17 are formed on one chassis 16; guide bars 22 are installed on the transfer base 2 intersecting the chassis 16, the guide bars 22 are on the transfer base 2 intersecting the chassis 16, the guide bars 22 extend into the wall troughs 17, two or more than two guide bars 22 extend into the corresponding wall troughs 17 respectively, the smoothly operation of the transfer base 2 can then be ensured; the driving gear 19 driven by a motor 12 connects the transfer base 2 and the chassis 16, and a driven rack 20 that matches the driving gear 19 is formed on an appropriate position at the inner transfer unit 3 of the transfer base 2, a limiting device is provided at the transfer base 2 to prevent the separation of the transfer base 2 and the driving gear 19, such as the convex point 21 that extends towards the direction of the driving gear 19; a first convex block 29 is formed at a proper position at the bottom of the loading system inside the housing unit 27, a second convex block 30 is formed at the disc compatible apparatus 5 corresponding to the first convex block formed at the bottom of the housing unit 27, a third convex block 31 is formed at the left, right clipping plates 4 corresponding to the first convex block formed at the bottom of the housing unit 27, when the transfer base 2 travels to the reading and writing position, the first convex block 29 lifts up the second 30 and third 31 convex blocks, and then the clipping plates 4, the disc compatible apparatus 5, and disc are lifted up and separated; an adjustment signal control 114 is provided at a proper position at the bottom of the housing unit 27 of the loading system for adjusting the relative position between the transfer base 2 and the housing unit; the adjustment signal control 114 includes a support frame 37, and two flexible plates 33 that are fixed on the support frame, every flexible plate contains an electrical connector 34 for connecting to the circuit, an adjustable screw 35 is provided at one end of the support frame fixed with the flexible plate, the adjustment signal control 114 is fixed inside the loading system by some screws 36. When inserting a small disc, the small disc enters into the curved blocking blades 9, and triggers the first signal control 111 at the final position, activating the motor, driving the inner transfer unit 3 of the transfer base 2 to travel to the predetermined position and then stop, the first convex block 29 lifts up the second 30 and third 31 convex blocks, and separates the disc compatible apparatus 5, the left, right clipping plates 4, the inner transfer unit 3 and the disc; at the same time, the optical pickup mechanism arises, driving the disc to leave the inner transfer unit 3 to a proper position, the disc is then driven by a spindle motor to start spinning for reading and writing. When inserting a big disc, because the diameter of the big disc is larger than the diameter of the curved blocking blades 9, the edge of the disc first touches the guiding bevel 10 provided between the fore end of the curved blocking blades 9 and its lower surface, the curved blocking blades 9 are lifted up by the disc, the disc is then entering the inner transfer unit 3, triggering the second 112 and third 113 signal controls, driving the inner transfer unit 3 of the transfer base 2 to travel to the predetermined position and then stop, the first convex block 29 lifts up the second 30 and third 31 convex blocks, and separates the disc compatible apparatus 5 and the left, right clipping plates 4, the inner transfer unit 3 and the disc; at the same time, the optical pickup mechanism arises, driving the disc to leave the inner transfer unit 3 for a proper position, the disc is then driven by a spindle motor to start spinning for reading and writing.

### PREFERRED EMBODIMENT 2

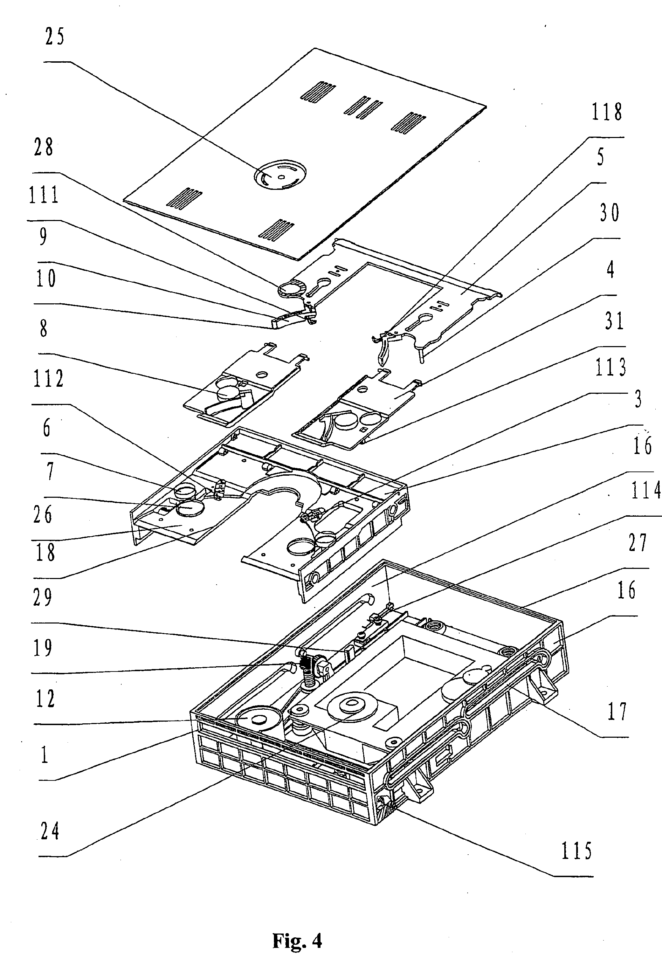

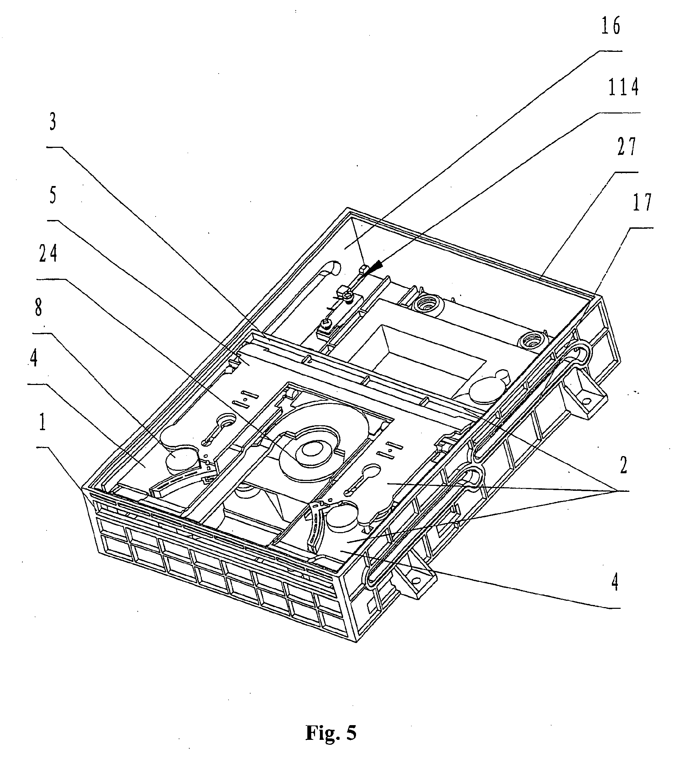

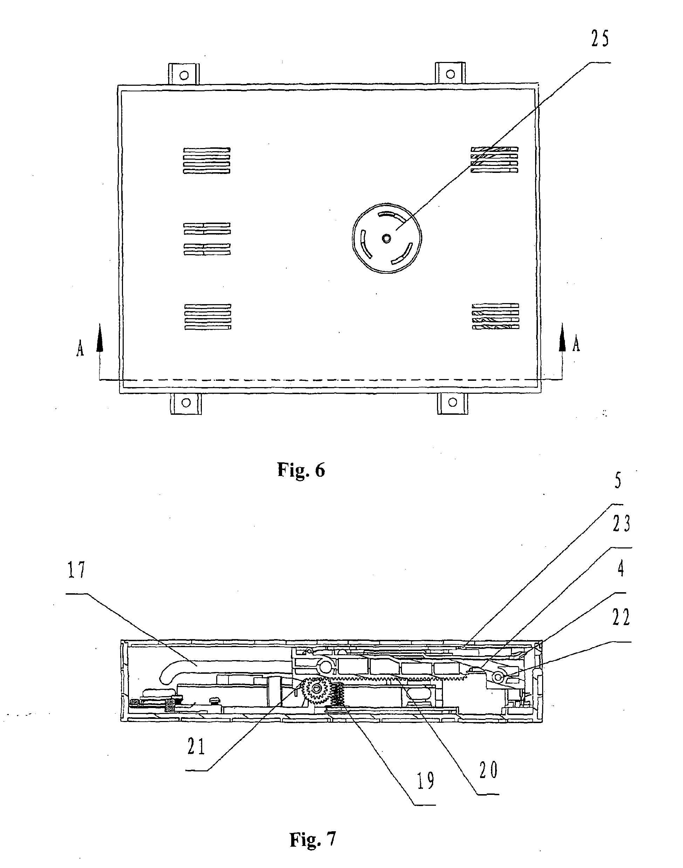

As shown in Figure 4 to Figure 10, another preferred embodiment of the present invention is that a slot 1 for slotting in disc is provided at the housing unit 27, the transfer base 2 is inside the slot 1 of the housing unit 27; the transfer base 2 includes an inner transfer unit 3 for holding discs, a rubber tier for preventing disc friction damage is installed at the fore end of the inner transfer unit 3 where gets in touch with discs, a hole 18 that reveals the reading and writing pickup unit is formed on the inner transfer unit 3 and a disc holder 26 corresponding to disc with 120 mm diameter, the holding spot of the disc holder 26 is patched with a cushion cloth to prevent damaging the disc, a driving rack 20 corresponding to the driving gear 19 driven by a motor 12 is provided at the bottom of the transfer base 2, installed on the inner transfer unit 3 are the left, right clipping plates 4, and a disc compatible apparatus 5 that is compatible with and capable of controlling big and small disc from entering the inner transfer unit 3; the left, right clipping plates 4 and the back end of the disc compatible apparatus 5 are connected to the inner transfer unit 3, the fore end of the disc compatible apparatus is a free end, which can turn within certain angles; the disc compatible apparatus 5 is on top of the clipping plates 4, clipping plates 4 is on top of the inner transfer unit 3, there is a first iron plate 7 at the disc holding point of the inner transfer unit 3, and a first magnet is formed at the fore end of the clipping plates 4 where get in contact with discs, the first iron plate 7 and the first magnet 8 tightly clamp disc by attracting to each other, there is a second iron plate 28 at the disc compatible apparatus 5, the second iron plate 28 attracts to a corresponding second magnet 6 that locates at the inner transfer unit 3 through the corresponding aperture on the left, right clipping plates 4, the disc compatible apparatus 5 is closely packed to the inner transfer unit 3 with the left, right clipping plates 4 in between; a signal switch includes a first signal control 111 that controls the activation of the driving apparatus during small disc insertion and a second signal control 112 and a third signal control 113 that together control the activation of the driving apparatus during big discs insertion, the first signal control is at the disc compatible apparatus 5, the second 112 and third 113 signal controls are at the inner transfer unit 3, and are connected in series, the first signal control 111 and the serial circuit formed by the second 112 and third 113 signal controls are connected in parallel, this parallel circuit is connected to the control circuit outside the loading system, the second and third signal controls are in a location that can only be touched simultaneously when a big disc is traveling in the loading system not when a small disc is traveling inside the loading system; there are curved blocking blades 9 with diameter equal or slightly larger than 80 mm formed at the two sides of the fore end slot 1 of the disc compatible apparatus 5, the curved blocking blades 9 at the two sides are smaller than or equal to half a circle, apertures are formed corresponding to the curved blocking blades 9 at the left, right clipping plates 4, the curved blocking blades 9 of the disc compatible apparatus 5 are closely packed to the inner transfer unit 3 with the left, right clipping plates 4 in between under magnetic force, there is a guiding bevel 10 formed between the fore end of the curved blocking blades 9 and the lower surface; the slot 1 is flanked by a chassis 16 of the housing unit 27, wall troughs 17 are formed at two sides of the chassis 16, the wall troughs 17 extend along the disc traveling direction, and two or more than two wall troughs 17 are formed on the chassis 16, the wall troughs may not have the same level, guide bars 22 are installed on the transfer base 2 intersecting the chassis 16, the guide bars 22 are on the transfer base 2 intersecting the chassis 16, the guide bars 22 extend into the wall troughs 17, at the back end of the wall troughs 17, the wall troughs 17 curve downward, when the guide bars 22 travel to the downward curving point, a groove 23 that conforms to the shape of the driving gear 19 is formed at a corresponding spot where the driven rack 20 gets into contact with the driving gear 19, two or more than two guide bars 22 extend into the corresponding wall troughs 17 respectively, the smooth operation of the transfer base 2 can then be ensured, the downward curving point of the wall troughs 17 back end corresponds to the transfer base 2 and moves the disc to the position of the disc holder 24 of the spindle motor or moves the disc to the guide bar's 22 position where the disc is within the range of the disc holder 24; the transfer base 2 and the chassis 16 are connected by the driving gear 19 driven by the motor 12, and a driven rack 20 that matches the driving gear 19 is provided on an appropriate position at the inner transfer unit 3 of the transfer base 2, a limiting device is provided at the transfer base 2 to prevent the separation of the transfer base 2 and the driving gear 19, such as the convex point 21 that extends towards the direction of the driving gear 19, a first convex block 29 is formed at a proper position at the bottom of the loading system inside the housing unit 27, a second convex block 30 corresponding to the convex block formed at the bottom of the housing unit 27 is formed at the disc compatible apparatus 5, a third convex block 31 corresponding to the first convex block formed at the bottom of the housing unit 27 is formed at the left, right clipping plates 4, when the transfer base 2 travels to the position around the downward curving point, that is around the reading and writing position, the transfer base 2 descends, the first convex block 29 lifts up the second 30 and third 31 convex blocks, and then the clipping plates 4, and the disc compatible apparatus 5, and the disc are lifted up and separated; an adjustment signal control 114 is provided at a proper position at the bottom of the housing unit 27 of the loading system for adjusting the height of the transfer base 2 when it travels around the downward curving point; the adjustment signal control 114 includes a support frame 37, and two flexible plates 33 that are fixed onto the support frame, every flexible plate contains an electrical connector 34 for connecting to a circuit, an adjustable screw 35 is provided at one end of the support frame fixed with the flexible plate, the adjustment signal control 114 is fixed inside the loading system by some screws 36. When inserting a small disc, the small disc enters into the curved blocking blades 9 at the left, right clipping plates 4, and triggers the first signal control 111 at the disc compatible apparatus 5 when it reaches the final position, electricity circuit complete, the motor 12 is activated driving the driving gear 19 to spin, and further drives the driven rack 20 that matches the driving gear at the bottom of the transfer base 2, enabling the transfer base 2 to travel along the wall troughs 17 to the downward curving point of the wall troughs 17, and placing the disc into the disc holder 24 of the spindle motor or into the range of the disc holder 24, at this time, the guide bar 22 of the transfer base 2 is located at the downward curving point of the wall troughs 17, and descends at the wall troughs 17 track, and triggers the adjustment signal control 114 after it reaches the final position, shuts down the motor 12, at the same time, the first convex block 29 lifts up the second 30 and third 31 convex blocks, making the transfer base 2 separates from the disc, the disc falls into the disc holder 24 of the spindle motor, the disc clamp 25 descends, the transfer base 2 triggers the signal control of the optical pickup mechanism, drives the spindle motor to rotate, and activates the disc to spin and starts the reading and writing process; during the unloading, the driving apparatus operates the process as stated above reversely, sends out the disc, when the transfer base 2 travels to the limiting device at the fore end, triggers the adjustment signal control 115, shuts down the motor 12 of the driving gear 19, traveling stops, disc is unloaded. When inserting a big disc, because the diameter of the big disc is larger than the diameter of the curved blocking blades 9, the edge of the disc first touches the guiding bevel 10 at the outer portion of the curved blocking blades 9, the curved blocking blades 9 of the disc compatible apparatus 5 are lifted up by the disc, the disc is then entering the disc holder 26 of the inner transfer unit 3, and is tightly clamped by the clipping plates 4, triggers the two signals in series the second 112 and third 113 signal controls at the inner transfer unit 3 when it reaches the final position, electrical circuit complete, the motor 12 is activated driving the driving gear 19 to spin, and further drives the driven rack 20 that matches the driving gear at the bottom of the transfer base 2, enabling the transfer base 2 to travel along the wall troughs 17 to the downward curving point of the wall troughs 17, and placing the disc into the disc holder 24 of the spindle motor or into the range of the disc holder 24, at this time, the guide bars 22 of the transfer base 2 is located at the downward curving point of the wall troughs 17, and descends at the wall troughs 17 track, and triggers the adjustment signal control 114 after it reaches the final position, shuts down the motor 12, the first convex block 29 lifts up the second and third 31 convex blocks, making the transfer base 2 separates from the disc, the disc falls into the disc holder 24 of the spindle motor, the disc clamp 25 descends, the transfer base 2 triggers the signal control of the optical pickup mechanism, drives the spindle motor to rotate, and activates the disc to spin and starts the reading and writing process; during the unloading, the driving apparatus operates the process as stated above reversely, sends out the disc, when the transfer base 2 travels to the limiting device at the fore end, triggers the adjustment signal control 115, shuts down the motor 12 of the driving gear 19, traveling stops, disc is unloaded. If the edge of a small disc first touches the guiding bevel 10 at the outer portion of the curved blocking blades 9, the curved blocking blades 9 of the disc compatible apparatus 5 is lifted by the disc, the disc enters into the disc holder 26 of the inner transfer unit 3, because the disc cannot touch the second 112 and the third 113 signal controls, the circuit is not complete, thus, the small disc cannot get under the optical pickup unit.

The signal switch is formed by two pieces of flexible bronze or brass 13, and is fixed into an electrical circuit by a plastic cover 14, a plurality of apertures are formed on the proper positions on the plastic cover 14, for future installment convenience, one end of the two pieces bronze or brass 13 extend to the same direction and curve to form parallel planes, the other end of these two pieces bronze or brass 13 are extending out as insertion plates; in use, it is fixed onto the needed position by connectors through the plurality of apertures, such as on the inner transfer unit 3 and the disc compatible apparatus 5, one end of the insertion bronze or brass plates 13 connect to the connectors of the object in use to form a circuit, through another end to press or push the bronze or brass plates 13 along the curving direction of the bronze or brass plates 13, forcing two curving bronze or brass plates to contact each other, the circuit is connected and functioned as a switch.

### PREFERRED EMBODIMENT 3

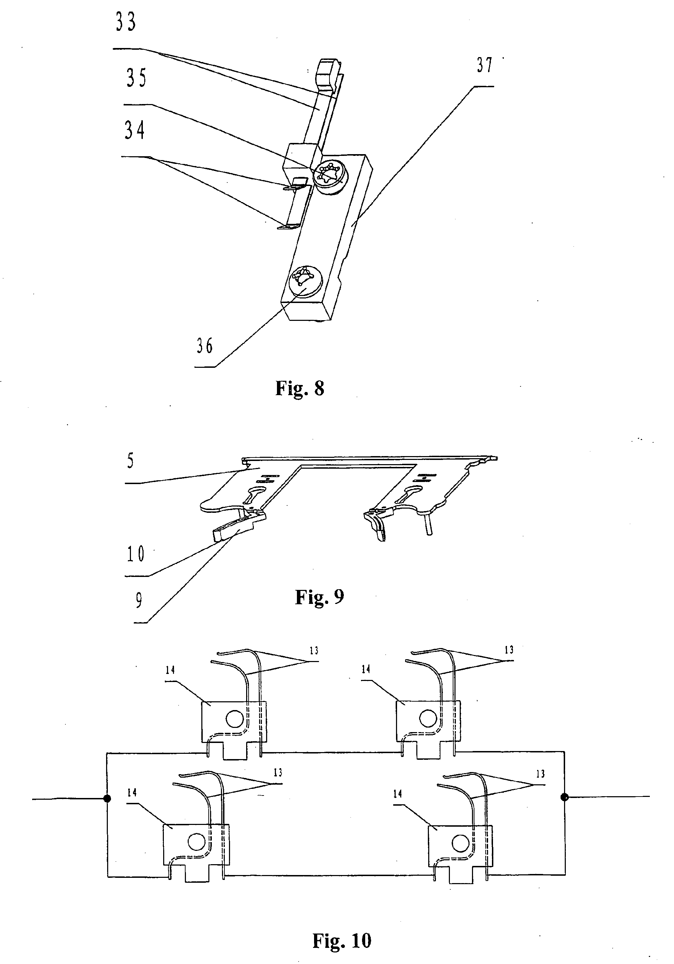

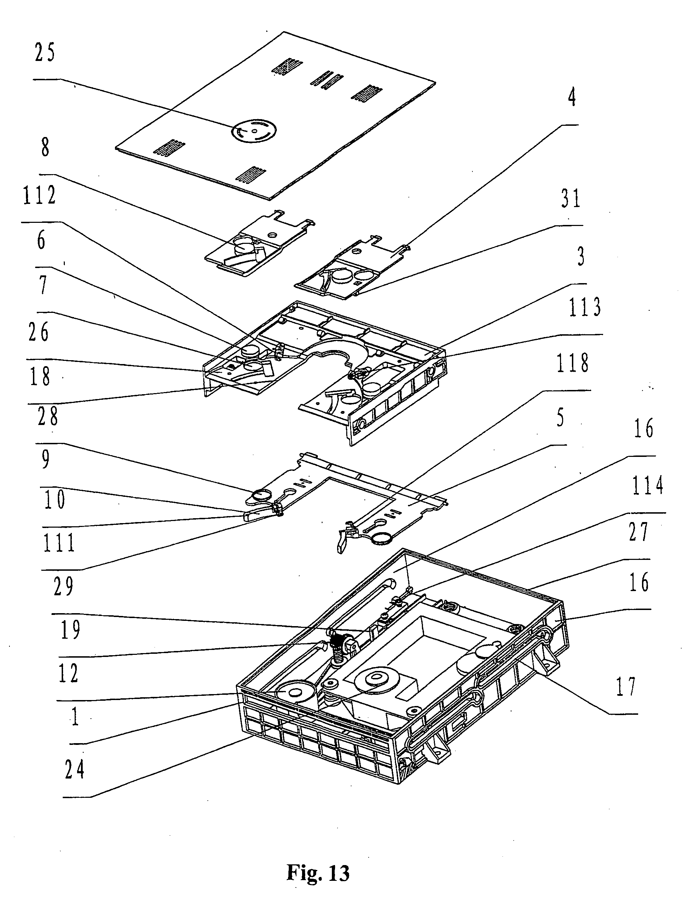

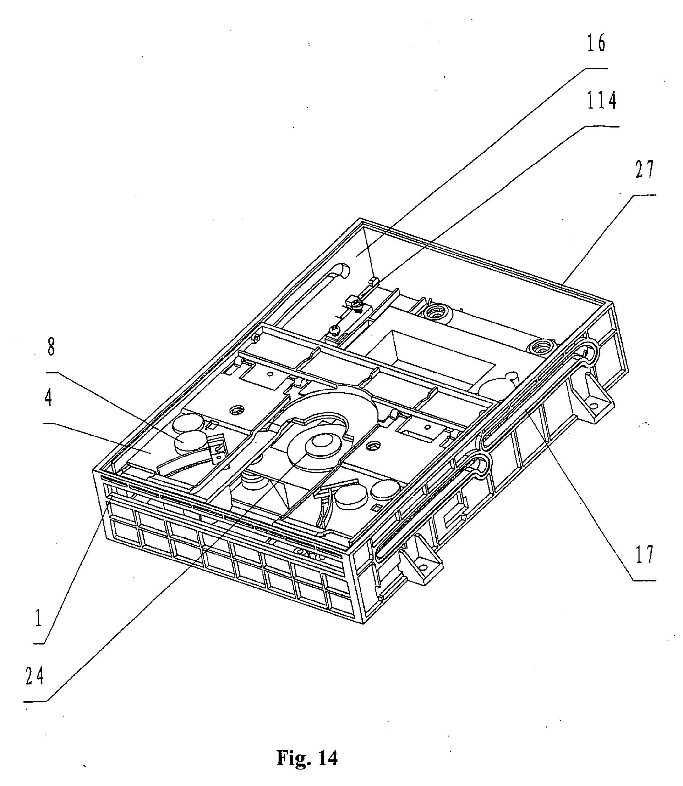

As shown in Figure 8, Figure 10, Figure 13 and Figure 14, another preferred embodiment of the present invention is, comparing to the Figures of the preferred embodiment 2, having reversed positions of the inner transfer unit 3, the left, right clipping plates 4 and the disc compatible apparatus 5 from the preferred embodiment 2, the inner transfer unit 3 is on top, then in a descending order the left, right clipping plates 4 and the disc compatible apparatus 5, the inner transfer unit 3 is on top of the clipping plates 4, and the clipping plates 4 is on top of the disc compatible apparatus 5, in addition, the convex block for separating the clipping plates 4, the disc compatible apparatus 5, the inner transfer unit 3 from the disc at its reading and writing position is arranged from the proper position at the bottom inside the housing unit 27 as arranged in preferred embodiment 2 to the inner surface of the top cover of the loading system; except the guiding bevel 10 of the disc allocation configuration at the fore end of the disc compatible apparatus 5 is formed between the disc compatible apparatus upper surface and the curved blocking blades 9, all the relative positions and structures the disc allocation of the inner transfer unit 3, the left, right clipping plates 4 and the disc compatible apparatus 5 remains the same. In the present preferred embodiment, the guide bar track can be a straight guide bar track. When inserting a small disc, the small disc enters into the curved blocking blades 9 of the left, right clipping plates 4, and triggers the first signal control 111 at the disc compatible apparatus 5 when it reaches the final position, and then triggers the adjustment signal control 114, shuts down the motor 12, the convex block touches the separation convex blocks of the disc compatible apparatus 5 and the clipping plates 4, separates the inner transfer unit 3 and left, right clipping plates 4 and the disc, the disc falls on the disc clamp 25, drives the spindle motor to rotate, and activates the disc to spin and start the reading and writing process; during the unloading, the driving apparatus operates the process as stated above reversely, sends out the disc, when the transfer base 2 travels to the limiting device at the fore end, triggers the adjustment signal control 115, shuts down the motor 12 of the driving gear 19. When inserting a big disc, because the diameter of the big disc is larger than the diameter of the curved blocking blades 9, the edge of the disc first touches the guiding bevel 10 at the outer edge of the curved blocking blades 9, the curved blocking blades 9 of the disc compatible apparatus 5 are lifted up by the disc, the disc is then entering the disc holder of the inner transfer unit 3, and tightly clamped by the clipping plates 4, and triggers the second 112 and third 113 two serial signal controls of the inner transfer unit 3 when reached to the predetermined position, circuit complete, the motor 12 is activated driving the driving gear 19 to rotate, and further drives the driven rack 20 that matches the driving gear at the bottom of the transfer base 2, and triggers the adjustment signal control 114 after it reaches the final position, shuts down the motor 12, the first convex block 29 lifts up the second 30 and third 31 convex blocks, making the inner transfer unit 3 and the left, right clipping plates 4 separate from the disc, the disc falls onto the disc clamp 25 under gravity force, drives the spindle motor to rotate, and activates the disc to spin and start the reading and writing process; during the unloading, the driving apparatus operates the process as stated above reversely, sends out the disc, when the transfer base 2 travels to the limiting device at fore end, triggers the adjustment signal control 115 at the fore end, shuts down the motor 12 of the driving gear 19.

### PREFERRED EMBODIMENT 4

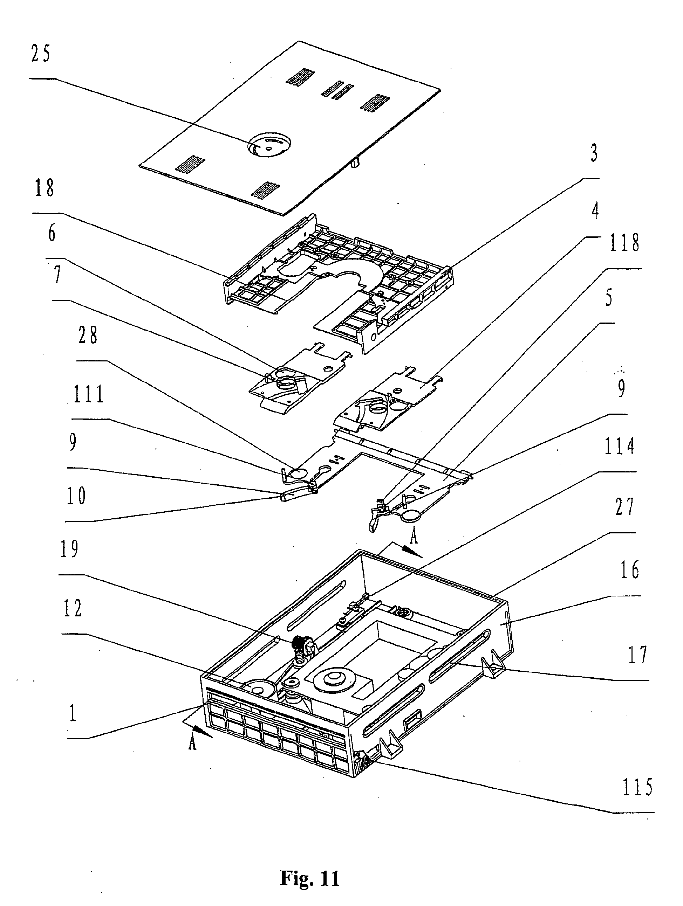

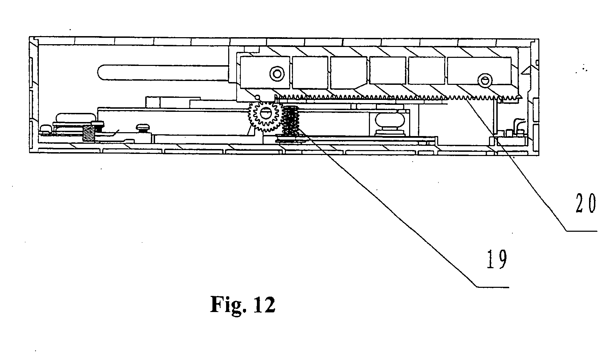

As shown in Figures 11 and 12, another preferred embodiment of the present invention is that the transfer base 2 includes an inner transfer unit 3 for holding discs, a rubber tier for preventing disc friction damage is installed at the fore end of the inner transfer unit 3 where gets in touch with discs, a hole 18 that reveals the reading and writing pickup mechanism is formed on the inner transfer unit 3 and a disc holder 26 corresponding to discs with 120 mm diameter, the holding spot of the disc holder 26 is patched with a cushion cloth to prevent damaging the disc, a driving rack 20 matching the driving gear 19 driven by the motor 12 is provided at the bottom of the transfer base 2; the left, right clipping plates 4 and a disc compatible apparatus 5 that is compatible with and capable of controlling big and small disc from entering the inner transfer unit 3 is provided on the inner transfer unit 3; the disc compatible apparatus 5 is installed on the lower part of the inner transfer unit 3, the left, right clipping plates 4 and the back end of the disc compatible apparatus 5 are connected to the inner transfer unit 3, the fore end is a free end, which can turn within certain angles, the clipping plates 4 is on top of the inner transfer unit 3, and the inner transfer unit 3 is the disc compatible apparatus 5, a first magnet 6 is formed at the fore end of the clipping plates 4 where the clipping plates get in contact with the disc, the first magnet 6 attracts the first iron plate 7 at the disc holding point of the inner transfer unit 3 and tightly clamp the disc; a second iron plate 28 is provided at the disc compatible apparatus 5, it is attracted to the corresponding second magnet 8 that locates at the inner transfer unit 3 through the corresponding aperture on the left, right clipping plates 4; a signal switch includes a first signal control 111 that controls the activation of the driving apparatus during small disc insertion and a second signal control 112 and a third signal control 113 that control the activation of the driving apparatus during big disc insertion, the first signal control is at the disc compatible apparatus 5; the second 112 and third 113 signal controls are at the inner transfer unit 3, and are connected in series; the first signal control 111 and the serial circuit formed by the second 112 and third 113 signal controls are connected in parallel, this parallel circuit is connected to the control circuit outside the loading system, the second 112 and third 113 signal controls are in a location where can only be touched simultaneously when a big disc is traveling in the loading system not when a small disc is traveling inside the loading system; at the fore end slot 1 of the disc compatible apparatus 5, there are curved blocking blades 9 with diameter equal or slightly larger than 80 mm formed at the two side edges, the curved blocking blades 9 at the two side edges are equal or smaller than half a circle, there are apertures formed corresponding to the curved blocking blades 9 at the inner transfer unit 3, under the magnetic force, the curved blocking blades 9 of the disc compatible apparatus 5 are closely packed next to the inner transfer unit 3 through the left, right clipping plates 4, there is a guiding bevel 10 formed at the fore end bottom of the curved blocking blades 9; the slot 1 is flanked by a chassis 16 of the housing unit 27, wall troughs 17 are formed at two sides of the chassis 16, the wall troughs 17 extend along the disc traveling direction, and two or more than two wall troughs 17 are formed on the chassis 16, the wall troughs may not be at the same level, guide bars 22 are installed on the transfer base 2 intersecting the chassis 16, the guide bars 22 are on the transfer base 2 intersecting the chassis 16, the guide bars 22 extend into the wall troughs 17, at the back end of the wall troughs 17, the wall troughs 17 curve downward, when the guide bars 22 approach to the downward curving point of the wall troughs 17, a groove 23 that conforms to the shape of the driving gear 19 is formed at a corresponding spot where the driven rack 20 contacts the driving gear 19, two or more than two guide bars 22 extend into the corresponding wall troughs 17 respectively, the smooth operation of the transfer base 2 can then be ensured, the downward curving point of the wall troughs 17 back end corresponds to the transfer base 2 and moves the disc to the position of the disc holder 24 of the spindle motor or moves the disc to the guide bar's 22 position where the disc is within the range of the disc holder 24; the transfer base 2 and the chassis 16 are connected by the driving gear 19 driven by the motor 12, and a driven rack 20 that matches the driving gear 19 is formed on an appropriate position at the inner transfer unit 3 of the transfer base 2, a limiting device is provided at the transfer base 2 to prevent the separation of the transfer base 2 and the driving gear 19, such as the convex point 21 that extends towards the direction of the driving gear 19, a first convex block 29 is formed at a proper position at the bottom of the optical pickup mechanism inside the housing unit 27, a second convex block 30 is formed corresponding to the convex block formed at the bottom of the housing unit 27 at the disc compatible apparatus 5, a third convex block 31 is formed corresponding to the convex block formed at the bottom of the housing unit 27 at the left, right clipping plates 4, when the transfer base 2 travels to the position around the downward curving point, that is the reading and writing position, the transfer base 2 descends, the first convex block 29 lifts up the second 30 and third 31 convex blocks, and then the clipping plates 4, the disc compatible apparatus 5, and disc are lifted and separated; an adjustment signal control 114 is provided at a proper position at the bottom of the housing unit 27 of the loading system for adjusting the height of the transfer base 2 when it travels around the downward curving point of the guide bar track; the adjustment signal control 114 includes a support frame 37, and two flexible plates 33 that are fixed onto the support frame, every flexible plate contains an electrical connector 34 for connecting to the circuit, adjustable screws 35 are provided at one end of the support frame, the adjustment signal control 114 is fixed inside the loading system by some screws 36. When inserting a small disc, the small disc enters into the curved blocking blades 9, and under the magnetic force tightly clamped to the inner transfer unit 3 by the left, right clipping plates 4, it triggers the second signal control 112 at the disc compatible apparatus 5 when it reaches the final position, the motor 12 is activated moving the disc into the a position for reading and writing; when inserting a big disc, because the diameter of the big disc is larger than the diameter of the curved blocking blades 9 of the disc compatible apparatus 5, the edge of the disc first touches the guiding bevel 10 at the outer edge of the curved blocking blades 9, the curved blocking blades 9 of the disc compatible apparatus 5 are pressed down by the disc, the disc is then entering the inner transfer unit 3, and tightly clamped by the clipping plates 4, further triggers the serial second 112 and third 113 signal controls of the inner transfer unit 3 when reached to the predetermined position, the motor 12 is activated driving the driving gear 19 into the reading and writing position, the inner transfer unit 3 and the disc compatible apparatus 5 start to move downward, meanwhile the convex block lifts the left, right clipping plates 4, the disc falls into the reading and writing position under the gravity force, drives the spindle motor to rotate, and activates the disc to spin and start the reading and writing process; during the unloading, the transmission mechanism of the driving apparatus operates the process as stated above reversely, the inner transfer unit 3 and the disc compatible apparatus 5 arise, also drives the disc to arise, at the same time the clipping plates 4 once again clamp the disc tight and send it out, when the transfer base 2 travels to the limiting device at the fore end, touches the signal switch of the spindle motor, and shuts down the motor 12.

### PREFERRED EMBODIMENT 5

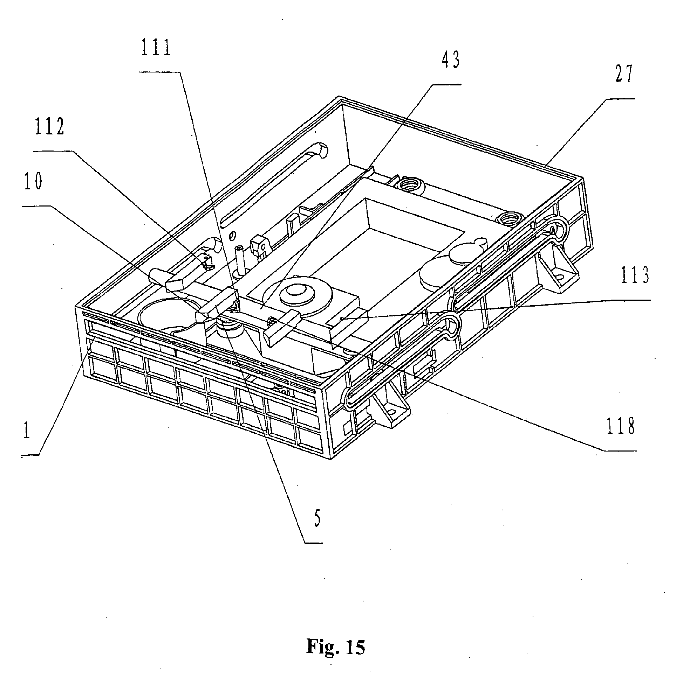

As shown in Figures 10 and 15, a disc loading system compatible with large and small disc sizes includes a housing unit 27, a rolling shaft 43, a signal switch etc., a slot 1 is provided at the housing unit 27, a transporting mechanism provided inside the housing unit for transporting discs to the position for reading and writing includes a rolling shaft 43, a disc compatible apparatus is also provided inside the housing unit 27, the fore end of the disc compatible apparatus 5 has some degrees up and down flexibility, the connection between the disc compatible apparatus 5 and the upper cover of the housing unit can be made with a flexible connector; or the connection between the disc compatible apparatus 5 and the upper cover of the housing unit can be made with a chain flexible connector; or a support can be provided inside the housing unit to support the disc compatible apparatus 5, which is connected to the support by a chain flexible connector. A disc holder that conforms to the disc diameter is provided at the disc compatible apparatus along the disc entering direction, a guiding bevel 10 is formed between the fore end and the lower surface of the disc compatible apparatus as the disc allocation configuration. A first signal control 111 is provided at the disc compatible apparatus, and a second 112 and third 113 signal controls are connected in series at the housing unit, the second and third signal controls are in a location where can only be touched simultaneously when a big disc is traveling in the loading system not when a small disc is traveling inside the loading system. Only when a large disc is inserted, the second and third signal controls can be touched simultaneously, therefore, guarantees the rolling shaft 43 can be activated only when a large disc is placed into the large disc holder, preventing wrong operation. When inserting a small disc, it enters into the small disc holder of the disc compatible apparatus, and triggers the first signal control 111 at the disc compatible apparatus when it reaches the final position, the disc driven by the rolling shaft enters the reading and writing position, conversely, the disc is unloaded through the reverse process. When inserting a big disc, because the diameter of the big disc is larger than the diameter of the small disc holder, the edge of the disc first touches the guiding bevel or the directional curve at the fore end of the disc compatible apparatus, the fore end of the disc compatible apparatus is lifted up by the disc, the disc is then entering without touching the first signal control, triggering the two corresponding signal controls connected in series inside the housing unit, the rolling shaft drives the disc into the reading and writing position, conversely, the disc is unloaded through the reverse process. If the small disc touches the guiding bevel 10 at the fore end of the disc compatible apparatus during insertion, the fore end of the disc compatible apparatus is then lifted by the disc, the disc enters, because the disc cannot touch the serial second 112 and third 113 signal controls simultaneously, the circuit is not complete, thus, the small disc cannot get under the optical pickup unit.

The preferred embodiment of a slot-in loading system of the present invention does not require disc tray, and has many advantages, such as simple structure, very thin, convenient to use, low noise, low manufacturing precision requirements, low cost, compatible with large and small disc, effectively clamping disc, little or no damage and distortion to disc, high reading and writing quality, and apparatus like the laser head and collimating lens etc. can effectively avoid vibration and keep an accurate relative position with the disc.

## Claims

1. A disc loading system with compatibility of various disc sizes, comprising a housing unit (27), a transporting mechanism, a signal switch etc., a slot 1 for slotting in disc is provided at the housing unit (27), the transporting mechanism for transporting a disc to the reading and writing position is provided inside the housing unit, is **characterized in**: a disc compatible apparatus (5) is provided inside the housing unit, the fore end of the disc compatible apparatus some degrees up and down flexibility, a disc holder that conforms to the disc diameter is provided at the disc compatible apparatus along the disc entering direction, a disc allocation configuration is provided at the fore end of the disc compatible apparatus.

2. The disc loading system with compatibility of various disc sizes as claimed in claim 1 is **characterized in that**: the transporting mechanism includes a transfer base (2) and a driving apparatus, the transfer base (2) is installed inside the slot (1) within the housing unit (27), a hole (18) that reveals the reading and writing optical pickup mechanism is formed on the inner transfer unit (3) of the transfer base (2); the disc compatible apparatus (5) is connected to the inner transfer unit (3) flexibly, the fore end of the disc compatible apparatus (5) is a free end that can turn within certain angles.

3. The disc loading system with compatibility of various disc sizes as claimed in claim 1 is **characterized in that**: the signal switch includes a first signal control (111) that activates the driving apparatus when a small disc is inserted and a second signal control (112) that activates the driving apparatus when a big disc is inserted; the first signal control (111) locates at the disc compatible apparatus (5), and the second signal control (112) locates at the inner transfer unit (3); the first signal control (111) and the second signal control (112) are connected in parallel, wherein the parallel circuit is connected to the control circuit outside the loading system.

4. The disc loading system with compatibility of various disc sizes as claimed in claim 2 is **characterized in that**: the signal switch includes a first signal control (111) that activates the driving apparatus when a small disc is inserted and a second signal control (112) that activates the driving apparatus when a big disc is inserted; the first signal control (111) locates at the disc compatible apparatus (5), and the second signal control (112) locates at the inner transfer unit (3); the first signal control (111) and the second signal control (112) are connected in parallel, wherein the parallel circuit is connected to the control circuit outside the loading system.

5. The disc loading system with compatibility of various disc sizes as claimed in claim 4 is **characterized in that**: the second signal control 112 and the third 113 signal control are connected in parallel, the third 113 signal control is at the inner transfer unit (3), these two signal controls are in a location where can only be touched simultaneously when a big disc is traveling in the loading system not when a small disc is traveling inside the loading system.

6. The disc loading system with compatibility of various disc sizes as claimed in claim 5 is **characterized in that**: a big disc holder (26) with diameter conforming to the big disc at the inner transfer unit (3); the inner transfer unit (3) has clipping plates (4), the clipping plates (4) and the back end of the disc compatible apparatus (5) are connected to the inner transfer unit (3), the clipping plates (4) and the fore end of the disc compatible apparatus (5) are free ends that can turn within certain angles, a packing mechanism setup among the clipping plates (4), the disc compatible apparatus (5), and the inner transfer unit (3), a separation apparatus is convexly formed at the inner surface of the housing unit (27) for separating the clipping plates (4), the disc compatible apparatus (5) and the inner transfer unit (3) at the proper reading and writing position, a disc allocation configuration is the guiding bevel or the guiding curved surface (10) at the fore end of the disc compatible apparatus (5).

7. The disc loading system with compatibility of various disc sizes as claimed in claim 6 is **characterized in that**: the packing mechanism used among the disc compatible apparatus (5), the clipping plates, and the inner transfer unit (3) is: a first iron plate (7) on the disc holder of the inner transfer unit (3), a first magnet (8) attracted to the first iron plate on the disc holder of the inner transfer unit (3) for tightly clamping discs at the clipping plates (4) fore end where gets in contact with discs, a second iron plate (28) provided on the disc compatible apparatus (5), and a second magnet (6) attracted to the second iron plate on the inner transfer unit (3).

8. The disc loading system with compatibility of various disc sizes as claimed in claim 7 is **characterized in that**: a small disc holder is the curved blocking blades (9) provided at the two sides of the disc compatible apparatus (5) fore end with diameter slightly larger than or equal to the diameter of a small disc; the radian of the curved blocking blades (9) at the two sides are smaller or equal to half a circle, grooves corresponding to the curved blocking blades (9) are formed in proper positions of the inner transfer unit (3); the second iron plate on the disc compatible apparatus (5) is attracted to the second magnet on the inner transfer unit (3) and tightly packed next to the inner transfer unit (3) under the magnetic force, the disc allocation configuration is the guiding bevel or guiding curved surface (10) at the fore end of the blocking blades (9).

9. The disc loading system with compatibility of various disc sizes as claimed in claim 8 is **characterized in that**: the disc compatible apparatus (5) is on top of the clipping plates (4), and the clipping plates (4) are on top of the inner transfer unit (3), the disc compatible apparatus (5) is tightly packed close to the inner transfer unit (3) through the clipping plates (4), the clipping plates (4) are tightly packed next to the inner transfer unit (3); when the inner transfer unit (3) travels to the reading and writing position, the apparatus that separates the disc compatible apparatus (5), the clipping plates (4), the inner transfer unit (3) and the disc is a first convex block (29) formed at the proper position of the inner surface of the housing unit (27), the disc allocation configuration is the guiding bevel or guiding curved surface (10) formed between the fore end of the disc compatible apparatus (5) and its lower surface.

10. The disc loading system with compatibility of various disc sizes as claimed in claim 8 is **characterized in that**: the inner transfer unit (3) is on top of the clipping plates (4), the clipping plates (4) are on top of the disc compatible apparatus (5), the inner transfer unit (3) is tightly packed next to the clipping plates (4), the disc compatible apparatus (5) is tightly packed close to the inner transfer unit (3) through the clipping plates (4), when the inner transfer unit (3) travels to the reading and writing position, the apparatus that separates the inner transfer unit (3), the clipping plates (4), the disc compatible apparatus (5) and the disc is the first convex block (29) formed at the proper position of the inner surface of the housing unit (27), the disc allocation configuration is the guiding bevel or guiding curved surface (10) formed between the fore end of the disc compatible apparatus (5) and its upper surface.

11. The disc loading system with compatibility of various disc sizes as claimed in claim 8 is **characterized in that**: the clipping plates (4) are on top of the inner transfer unit (3), the inner transfer unit (3) is on top of the disc compatible apparatus (5), the clipping plates (4) are tightly packed next to the inner transfer unit (3), the inner transfer unit (3) is tightly packed next to the disc compatible apparatus (5), when the inner transfer unit (3) travels to the reading and writing position, the apparatus that separates the clipping plates (4),the inner transfer unit (3), the disc compatible apparatus (5) and the disc is the first convex block (29) formed at the proper position of the inner surface of the housing unit (27), the disc allocation configuration is the guiding bevel or guiding curved surface (10) formed between the fore end of the disc compatible apparatus (5) and its upper surface.

12. The disc loading system with compatibility of various disc sizes as claimed in claim 1 to claim 11 is **characterized in that**: one or more than one guide bars coupled with the transfer base (2), and one or more than one guide bar tracks that are corresponding to the plurality of guide bars are provided at the housing unit (27), the guide bar tracks are possibly not having the same height level, and are configured along the disc traveling direction, the back ends of the guide bar tracks smoothly curve downward, each downward curving point of the guide bar track back end corresponding to the transfer base (2) moves the disc to the position of the disc holder (24) of the spindle motor or moves the disc to the guide bar's (22) position where the disc is within the range of the disc holder (24).

13. The disc loading system with compatibility of various disc sizes as claimed in claim 12 is **characterized in that**: an adjustment signal control (114) is provided at a proper position of the inner bottom of the housing unit to adjust the height of the transfer base (2) when it travels around the downward curving point of the guide bar track.

14. The disc loading system with compatibility of various disc sizes as claimed in claim 13 is **characterized in that**: the slot (1) is flanked by a chassis (16) of the housing unit (27), the driving apparatus is a driving gear (19) driven by a motor that connects the transfer base (2) and the chassis (16) and a driven rack (20) that matches the driving gear (19) and is formed on an appropriate position of the inner transfer unit (3), a limiting device is provided on the transfer base (2) to prevent the separation of the transfer base (2) and the driving gear (19); when a guide bar (22) moves toward the downward curving point of a wall trough (17), a rabbet (23) that matches the shape of the driving gear (19) is formed at the corresponding position where the driven rack (20) gets in contact with the driving gear (19), the plurality of guide bar tracks are wall troughs (17) on the chassis (16), the plurality of guide bars (22) are on the transfer base (2) intersecting the chassis (16), the guide bars (22) extend into the corresponding wall troughs (17), in the back end of the wall troughs (17), the wall troughs (17) curve downward smoothly.

15. The disc loading system with compatibility of various disc sizes as claimed in claim 14 is **characterized in that**: the signal switch includes a flexible bronze or brass plate (13), and plastic cover (14) etc., the flexible brass (13) is fixedly connected to the plastic cover (14) to form a circuit; there are apertures on the plastic cover, for the future assembly use; one end of the brass plates (13) extend to the same direction and curve to form parallel planes, the other end of the two brass plates (13) are shown as insertion plates, and are connected to the signal control circuit; the adjustment signal control (114) includes a support frame (37) and two flexible plates (33) fixed onto the support frame etc., every flexible plate contains connectors (34) for electrical circuit connection, adjustable screws (35) are provided on one end of the support frame; the limiting device at the transfer base (2) is a convex block (21) extending from the transfer base (2) to the driving gear (19), a soft material is installed at the disc holder of the inner transfer unit (3) and the disc holding spot to prevent damaging discs.
